Europäisches Patentamt

European Patent Office

Office européen des brevets

(19)

(11) EP 0 534 837 B1

(12) FASCICULE DE BREVET EUROPEEN

(45) Date de publication et mention
de la délivrance du brevet:
**30.12.1998 Bulletin 1998/53**

(51) Int Cl.[6]: **G10L 3/02**, G10L 5/06

(21) Numéro de dépôt: **92402598.4**

(22) Date de dépôt: **22.09.1992**

(54) **Procédé de traitement de la parole en présence de bruits acoustiques utilisant la sous traction spectrale non-linéaire et les modèles de Markov cachés**

Sprachverarbeitungsverfahren bei Geräuschanwesenheit unter Verwendung eines nicht linearen spektralen Subtraktionsverfahrens und Hidden-Markov-Modellen

Speech processing method in presence of acoustic noise using non-linear spectral subtraction and hidden Markov models

(84) Etats contractants désignés:
**BE DE GB IT NL SE**

(30) Priorité: **25.09.1991 FR 9111833**

(43) Date de publication de la demande:
**31.03.1993 Bulletin 1993/13**

(73) Titulaire: **MATRA NORTEL COMMUNICATIONS
29000 Quimper (FR)**

(72) Inventeurs:
• **Boudy, Jérôme
F-78000 Versailles (FR)**
• **Lockwood, Philip
F-92160 Antony (FR)**

(74) Mandataire: **Fort, Jacques
CABINET PLASSERAUD
84, rue d'Amsterdam
75009 Paris (FR)**

(56) Documents cités:
WO-A-91/13430          DE-A- 4 012 349

• SPEECH COMMUNICATION vol. 11, no. 2-3, Juin 1992, AMSTERDAM NL pages 215 - 228 , XP000279184 LOCKWOOD, BOUDY 'Experiments with a nonlinear spectral subtractor, Hidden Markov Models and the profection, for robust speech recognition in cars'

• TREIZIEME COLLOQUE GRETSI SUR LE TRAITEMENT DU SIGNAL ET DES IMAGES 16 Septembre 1991, JUAN LES PINS FRANCE pages 733 - 736 , XP000242880 FAUCON, LE BOUQUIN 'Débruitage de la parole pur les radio-mobiles'

• IECON '87 INTERNATIONAL CONFERENCE ON INDUSTRIAL ELECTRONICS CONTROL AND INSTRUMENTATION vol. 2, 3 Novembre 1987, CAMBRIDGE MASSACHUSETS USA pages 985 - 996 NIEDERJOHN, LEE, JOSSE 'Factors related to spectral subtraction for speech in noise enhancement'

• INTERNATIONAL CONFERENCE ON ACOUSTICS SPEECH AND SIGNAL PROCESSING 2 Avril 1979, WASHINGTON DC USA pages 208 - 211 BEROUTI ET AL 'Enhancement of speech corrupted by acoustic noise'

• IEEE TRANSACTIONS ON ACOUSTICS,SPEECH AND SIGNAL PROCESSING vol. 37, no. 6, Juin 1989, NEW YORK US pages 939 - 942 KANG, FRANSEN 'Quality improvement of LPC processed noisy speech by using spectral subtraction'

• SIGNAL PROCESSING V: THEORIES AND APPLICATIONS. 18 Septembre 1990, BARCELONA pages 1103 - 1106 LE BOUQUIN, FAUCON 'On using the coherence function for noise reduction'

• SIGNAL PROCESSING. vol. 15, no. 1, Juillet 1988, AMSTERDAM NL pages 43 - 56 DAL DEGAN, PRATI 'Acoustic noise analysis and speech enhancement techniques for mobile radio applications'

- INTERNATIONAL CONFERENCE ON ACOUSTICS SPEECH AND SIGNAL PROCESSING vol. 2, 19 Mars 1984, SAN DIEGO CALIFORNIA pages 18A11 - 18A13 EGER, T.E.; SU, J.C.; VARNER, L.W. 'A nonlinear spectrum processing technique for speech enhancement.

- INTERNATIONAL CONFERENCE ON ACOUSTICS SPEECH AND SIGNAL PROCESSING vol. 2, 14 Mai 1991, TORONTO CANADA pages 921 - 924 CARLSON AND CLEMENTS 'Application of weighted projection measure for robust hidden markov model based speech recognition'

## Description

La présente invention concerne les procédés de traitement de signal de parole dans des environnements bruités. Elle est applicable chaque fois que le signal provenant d'un transducteur, généralement un microphone, doit être traité pour atténuer la contribution du bruit. A titre d'exemple, on peut notamment citer la transmission de la parole et la reconnaissance de la parole.

Elle trouve une application particulièrement importante dans la commande vocale après une phase d'apprentissage au cours de laquelle un locuteur, dont la parole doit être reconnue ultérieurement, prononce à plusieurs reprises les structures vocales à identifier par affectation à l'un des modèles mémorisés dans un lexique établi lors de l'apprentissage.

L'un des principaux problèmes auxquels se heurte la commande vocale est celui du faible rapport signal à bruit lors de la reconnaissance dans beaucoup de cas. Un exemple particulièrement important est la commande vocale d'opérations par le conducteur d'un véhicule, comme par exemple l'appel d'un correspondant téléphonique par simple prononciation de son nom, qui doit être reconnu et provoquer la numérotation automatique.

Dans ce cas particulier, le problème est très ardu pour de nombreuses raisons :

- l'apprentissage s'effectue, pour des raisons de sécurité, alors que le véhicule est à l'arrêt, c'est-à-dire en l'absence de bruit ;
- au cours de la phase de reconnaissance, les structures vocales sont pertubées non seulement par les bruits de roulement aérodynamiques et du moteur (qui ne sont ni stationnaires, ni à spectre plat), mais aussi par des facteurs qui agissent sur la prononciation, tels que la fatigue du locuteur ou le niveau de bruit ambiant (effet Lombard).

On connaît déjà (DE-A-4 012 349) un procédé de traitement de la parole reposant sur le principe de soustraction spectrale, mettant en oeuvre une double soustraction spectrale avec utilisation de deux microphones, l'un fournissant les signaux de parole entâchés de bruit, l'autre une voie de référence ne contenant que du bruit. Un terme multiplicatif k(f) est appliqué à l'amplitude spectrale du bruit. Il est directement proportionnel au rapport signal à bruit (RSB) local à la fréquence d'analyse et a pour effet de réduire la soustraction spectrale du bruit pour de faibles RSBs et de l'augmenter pour des RSBs élevés.

Or (cf. Enhancement of speech corrupted by acoustic noise, par M. Berouti et al, ICASSP 79, pp. 208-211) ce principe va à l'encontre des résultats établis pour le réglage d'un facteur équivalent appliqué de la même manière à l'amplitude spectrale du bruit. Le terme k(f) n'a pas un rôle de surestimateur mais au contraire de "de-pondérateur" au fur et à mesure que la contribution du bruit augmente.

La présente invention vise de façon générale à fournir un procédé de traitement de la parole permettant d'atténuer la contribution du bruit et qui soit efficace même en l'absence d'une référence de bruit fiable.

Pour cela l'invention utilise, parmi les techniques connues de renforcement de la parole en présence de bruit, la soustraction spectrale. Mais, conformément à l'invention, le procédé utilise une soustraction d'une fraction du bruit (estimé pendant les périodes de silence du locuteur) qui est plus élevée aux fréquences pour lesquelles la parole présente un faible rapport signal à bruit qu'aux autres fréquences.

De façon plus précise, l'invention propose un procédé selon la revendication 1.

Dans la pratique, le facteur de surestimation $\alpha(\omega)$ peut être calculé sur une vingtaine de trames (chaque trame faisant par exemple 32ms) et être constitué par la valeur maximale de l'estimation B parmi les valeurs prises sur ces vingt trames. Toutefois, la durée d'estimation peut varier dans des limites plus larges, de 200ms à 1s, suivant la vitesse de variation du bruit.

Le calcul de Y sera effectué pour chacune des fréquences de la transformée de Fourier intervenant dans la reconnaissance de la parole (en général 256 valeurs complexes pour une plage de 16 kHz). Grâce à l'utilisation d'un facteur de surestimation qui est fonction de la fréquence, on obtient un modèle de bruit amélioré, fournissant en sortie un signal de parole de qualité accrue du point de vue de la reconnaissance ultérieure.

La fonction opt[$\alpha(\omega)$] diffère suivant que le traitement précède la transmission du signal de parole ou la reconnaissance. Opt[$\alpha(\omega)$] sera généralement de la forme donnée en revendications 4 et 5 dans les premier et second cas.

Il est de plus préférable de fixer des bornes à opt[$\alpha(\omega)$], pour éviter d'arriver à des valeurs de surestimation trop importantes. Dans la pratique, opt[$\alpha(\omega)$] peut être limité en borne supérieure à 3, toute valeur calculée hors de ces limites étant remplacée par la limite correspondante.

La fonction de pondération F peut avoir diverses natures, une condition essentielle étant qu'elle soit décroissante en fonction du rapport signal à bruit [IXI/IBI prenant une valeur minimale (SNRmin) et maximale (SNRmax) sur la trame considérée]. La fonction F doit être du type des courbes I, II, III ou IV telles que représentées sur la figure 4.

Là encore, il est nécessaire de limiter la variation de opt[$\alpha(\omega)$].

L'invention vise au surplus à fournir un procédé de reconnaissance de la parole qui soit robuste en présence d'un bruit variable réduisant le rapport signal à bruit à une faible valeur, utilisant un traitement du signal du type qui vient d'être défini.

La reconnaissance s'effectue par classification. Elle peut utiliser des processus de recherche de distance euclidienne minimale, classiques et donc qu'il ne sera pas nécessaire de décrire de nouveau ; elle utilise avantageusement une démarche utilisant les distances projetées et un algorithme de Viterbi et un aspect secondaire de l'invention porte sur la reconnaissance proprement dite par décision douce, du type algorithme de Viterbi, améliorant la reconnaissance, notamment par une stratégie de reconnaissance utilisant le modèle de Markov caché.

Des techniques fondées sur le modèle de Markov caché, ou HMM ont déjà été proposées, notamment dans les articles "Continuous speech recognation using hidden Markov models" de J. Picone, IEEE ASSP Magazine, juillet 1990, pages 26-41". Les modèles de Markov eux-mêmes sont décrits dans divers documents, et notamment "An introduction to hidden Markov models", de L.R. Rabiner et autres, IEEE ASSP Magazine, janvier 1986, pages 4-16, auxquels on pourra se reporter. On sait que ces techniques donnent de bons résultats lorsque l'apprentissage s'effectue dans une ambiance sonore comparable à celle de la reconnaissance. En revanche, les performances d'un appareil de reconnaissance classique fondé sur le modèle de Markov caché sont très dégradées lorsque l'apprentissage s'effectue en l'absence du bruit présent lors de la reconnaissance, et surtout lorsque ce bruit est non stationnaire. L'application de l'étape de traitement décrite plus haut permet d'améliorer considérablement les performances d'un procédé de reconnaissance fondé sur le modèle de Markov dans les conditions ci-dessus et le rend particulierement avantageux.

En effet, le modèle de Markov ou HMM permet de modéliser de façon plus efficace un signal de parole très variable, grâce à des algorithmes d'optimisation en eux-mêmes connus qui, par itération, ré-estiment en permanence des paramètres statistiques de façon à optimiser un critère de vraisemblance. Alors que l'utilisation efficace d'un modèle de Markov implique normalement une phase d'apprentissage complète et très fiable impliquant plusieurs dizaines de répétitions des structures vocales à reconnaître, la mise en oeuvre de l'invention permet de réduire le nombre de répétitions nécessaires.

Il est au surplus avantageux d'utiliser une stratégie de reconnaissance utilisant l'algorithme de Viterbi et une nouvelle utilisation des distances de projection, qui sera décrite plus loin.

Pour un modèle de Markov à N états, les densités d'observation continues sont données par une expression du genre :

$$b_j(O) = \sum c._{jm} \cdot N_{qk} \left\{ O, \mu_{jm}, \Sigma_{jm} \right\} \qquad (2)$$

pour l'état j, j étant compris entre 1 et N.

Dans la formule ci-dessus, $c_{jm}$ indique le coefficient de mélange pour le $m^{\text{ième}}$ composant de mélange de densité gaussienne modifié.

L'invention sera mieux comprise à la lecture de la description qui suit de modes particuliers de réalisation de l'invention, donnés à titre d'exemples non limitatifs. La description se réfère aux dessins qui l'accompagnent, dans lesquels :

- la figure 1 est un schéma de principe montrant les opérations effectuées lors de la transmission d'un signal de parole ;
- la figure 2 est un schéma montrant les étapes successives du traitement par soustraction non linéaire de la figure 1 ;
- la figure 3, similaire à la figure 1, montre les étapes d'un procédé de reconnaissance de structure vocale ;
- la figure 4 montre diverses formes possibles de la fraction de pondération F définie plus haut.

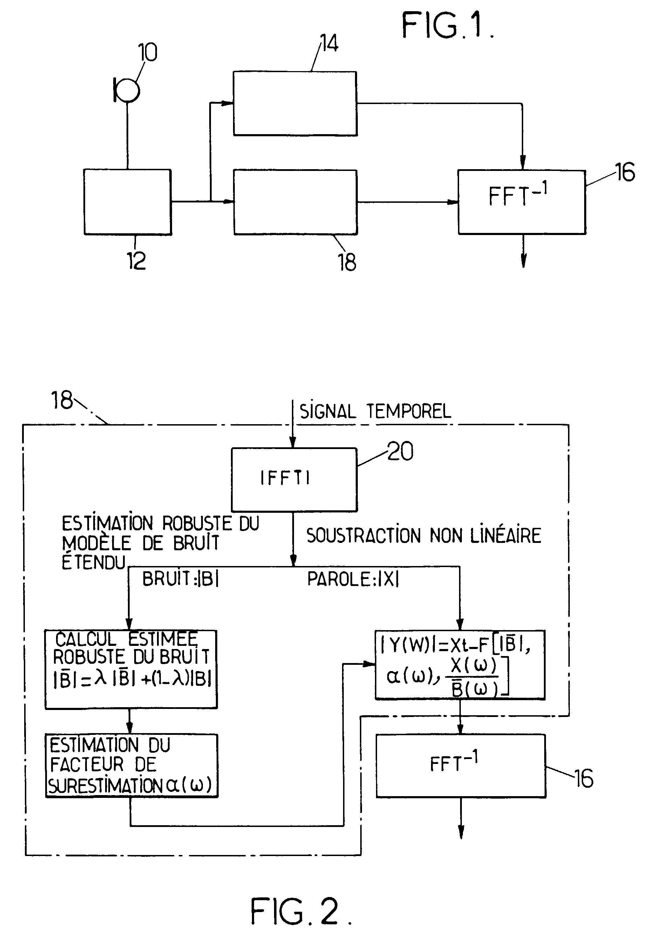

La figure 1 montre la constitution de principe d'un dispositif permettant le traitement d'un signal de parole, provenant d'un transducteur tel qu'un microphone 10, avant transmission en bande de base ou sur une porteuse quelconque. Il sera surtout question par la suite du traitement d'un signal de parole provenant d'un microphone unique placé dans un habitacle de véhicule. On sait que le problème de l'estimation du bruit est particulièrement difficile dans un tel environnement. En effet la cohérence du bruit à l'intérieur de l'habitacle est très faible et il n'est pas possible d'avoir une estimation convenable du bruit à l'aide d'un microphone de référence. Il semble difficile avec une prise de son à un capteur de ré-estimer le bruit, évalué au cours des pauses de la parole, pendant la parole. Le procédé de soustraction non linéaire, tel qu'appliqué pour la transmission de parole, fait disparaître les tonalités musicales inhérentes à une analyse classique.

Le signal provenant du microphone 10 est prétraité dans un circuit 12 de filtrage, d'échantillonnage, de numérisation et de fractionnement en trames de quelques millisecondes (16 ms fréquemment). Un circuit 14 permet d'extraire la phase du signal bruité, de façon à en disposer pour effectuer une transformée inverse, c'est-à-dire du domaine spectral dans le domaine temporel, en 16.

Le circuit 18 suivant l'invention de soustraction spectrale non-linéaire peut avoir la constitution générale montrée en figure 2. Il comporte un circuit 20 effectuant une transformation vers le domaine spectral (transformée de Fourier rapide en général) sur chaque trame. Les échantillons fréquentiels correspondant à chaque trame, au nombre de 512 par exemple dans le cas de signal complexe, sont appliqués à deux branches de calcul. La première branche est destinée à une estimation du modèle de bruit, qui doit être robuste étant donné l'importance de la contribution du bruit. La seconde branche est destinée à effectuer la soustraction non-linéaire proprement dite. Cette seconde branche est destinée à effectuer les soustractions suivant la formule donnant [Y($\omega$)] dans la revendication 1, à partir des indications fournies par la première branche. Le passage dans l'une ou l'autre des deux branches est conditionné par la décision de type bruit/parole. Cette décision est prise par un système non décrit ici.

Cette première branche effectue le calcul d'un modèle robuste de bruit, avec une constante de temps élevée, généralement de l'ordre de 0,9 pour $\lambda$.

Au lieu d'être effectuées par des circuits distincts, les opérations ci-dessus définies peuvent évidemment être effectuées entièrement ou partiellement par voie logicielle.

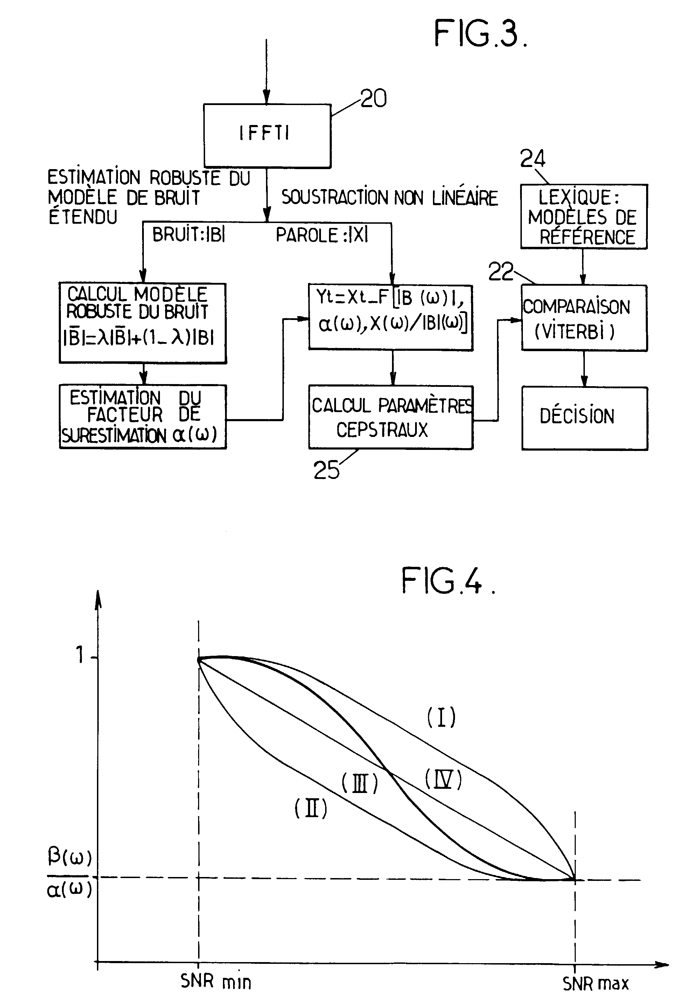

Les étapes de traitement du procédé de reconnaissance de structure vocale schématisé en figure 3 sont similaires à celles montrées en figures 1 et 2 et ne seront pas décrites de nouveau.

La reconnaissance proprement dite s'effectue de façon classique par une opération de comparaison 22 entre les modèles de référence mémorisés 24, obtenus au cours d'une séquence préalable d'apprentissage, et les paramètres de représentation de structure vocale, extraits en 25. Ces paramètres peuvent être fondés sur divers types d'analyse. Il peut notamment s'agir des coefficients cepstraux de prédiction linéaire ou de paramètres provenant d'une décomposition en sous-bandes de fréquence, (MFCC) tels que décrits dans l'article de Davis et al., "Comparison of parameter representations for monosyllabic word recognition in continuously spoken sentences", IEEE ASSP volume 28, 1980.

Dans un mode de réalisation de l'invention, particulièrement avantageux lorsque la définition des modèles de référence est faite à partir d'un petit nombre de répétitions du locuteur, des estimateurs de variance robustes doivent être adoptés. On peut notamment adopter une estimation à variance fixe ou une estimation à variance lissée.

L'utilisation d'un estimateur robuste présente l'avantage de compenser les performances réduites du modèle de Markov caché en cas d'apprentissage insuffisant.

De façon générale, il est avantageux d'utiliser un processus de reconnaissance par l'algorithme de Viterbi modifié pour mettre en oeuvre une projection de type cepstral, qui tend à écarter le bruit.

On peut notamment utiliser, pour les coefficients $\underline{b}$, les valeurs données par la formule (2) ci-dessus où $b_j(O)$ désigne les valeurs observées de $\underline{b}$, $c_{jm}$ indique le coefficient de mélange pour le $m_{ième}$ composant de densité mixte gaussienne. Les termes $\Sigma$ ont la signification habituelle, si ce n'est qu'ils peuvent être remplacés par des variances lissées.

Les matrices de variance-covariance sont choisies diagonales, en faisant l'hypothèse d'indépendance entre les composants d'un vecteur de caractéristique.

On peut alors écrire la nouvelle densité gaussienne modifiée :

$$N_{qk}\left\{O,\mu_{jm},\overline{\Sigma}_{jm}\right\} = [2\ PI)^P.|\overline{\Sigma}_{jm}|]^{-1/2}.\exp(0,5d(q,k))$$

où :

$$d(q,k)=[O-q\cdot\mu_{jm})^T\Sigma_{jm}{}^{-1}\ (O-q.\mu_{jm})]^k$$

Dans cette formule , $\underline{q}$ correspond à un facteur de sous-pondération.

On peut notamment utiliser, parmi les modes de projection ci-dessus, ceux qui correspondent aux cas particuliers ci-après :

cas de q=1, k=1,$\Sigma_{jm}=U_{jm}$

Ce cas est celui d'une densité gaussienne continue d'observation classique, où $U_{jm}$ indique la variance d'état du mélange d'ordre $\underline{m}$ dans l'état d'ordre $\underline{j}$ (une topologie à seize états donnant souvent des résultats satisfaisants).

cas de q=1, k=1,$\Sigma_{jm}=T$: variance fixe

La matrice de covariance est alors indépendante de l'état $\underline{j}$ et du mélange $\underline{m}$. La matrice T définit la variance pour un même locuteur des vecteurs cepstrum calculés au cours de la phase d'apprentissage avec un modèle HMM.

cas de q=1, k=1, $\Sigma_{jm}=I$

Dans le cas, la matrice de covariance d'état $U_{jm}$ est remplacée par la matrice identité I. Tous les composants observés ont le même poids. Ce choix présente un intérêt lorsque l'apprentissage HMM a été fait avec un nombre très faible de répétitions.

cas de q=q*, k=0.5, $\Sigma_{jm}$=I : distance de projection optimisée

La distance de projection optimisée peut être interprétée comme étant la racine carrée de la distance euclidienne minimum. Les densités normales sont alors transformées en des densités modifiées de la forme A.exp(-0.5IXI). Avec ces densités modifiées, la nouvelle forme de mélange rend l'algorithme de Viterbi plus discriminant sur des structures vocales.

En d'autres termes, ce choix de valeurs permet une soustraction non linéaire qui est favorable dans certains cas.

cas de q=q*, k=0.5, $\Sigma_{jm}$=$W^{-1}$ (W étant la matrice de variance-covariance)

Cette sélection de valeurs permet de conserver la distance de projection optimisée dans le calcul des densitées observées. On introduit ainsi les fonctions de lissage de la variance fixe T dont deux exemples ont donné des résultats satisfaisants.

La fonction dite "bandpass lifter" W(n)=1+N/2 sin($\Pi$N/2N).

La fonction dite "exponential lifter" W(n)=$n^\alpha$ où O$\leq\alpha\leq$1.

Ces types de fonction de lissage de T peuvent également être utilisés dans le cas q=1, k=1 (densité gaussienne).

Les exemples donnés ci-dessus ne sont évidemment nullement limitatifs et d'autres solutions encore sont possibles.

En résumé, la compensation du bruit par soustraction spectrale non linéaire améliore notablement les performances d'un processus de reconnaissance utilisant le modèle de Markov caché. Lorsque le nombre de répétitions est insuffisant pour un apprentissage complet, il est avantageux d'utiliser une estimation de variances lissées, ou une estimation à variance fixe. La reconnaissance par l'algorithme de Viterbi met en oeuvre la distance projetée et est particulièrement avantageuse après adaptation des fonctions de densité du modèle de Markov caché.

## Revendications

1. Procédé de traitement de signal de parole, caractérisé en ce qu'on applique, en vue de la transmission ou de la reconnaissance de la parole, un traitement de la forme :

$$IY[\omega] = IX[\omega]I - opt(\alpha(\omega)) I\bar{B}[\omega]I$$

à la transformée, du domaine temporel au domaine fréquentiel, de chaque trame d'un signal provenant d'un capteur, échantillonné, numérisé et formaté en trames de longueur déterminée, où :

- IX[$\omega$]I est l'estimation de l'amplitude de la parole affectée du bruit ;
- I$\bar{B}$[$\omega$]I= $\lambda$ I$\bar{B}$[$\omega$]I + (1-$\lambda$).IB[$\omega$]I est une estimation de l'amplitude du bruit, obtenue à partir d'observations du bruit, pendant des périodes de silence de la parole, estimé à l'aide d'un estimateur ayant une constante de temps $\lambda$ suffisante et à partir de l'estimation IB[$\omega$]I de l'amplitude du bruit, obtenue à partir de l'observation courante du bruit ;
- $\alpha(\omega)$ est un facteur de surestimation du bruit, calculé sur un nombre prédéterminé de trames de bruit en amont de la trame traitée et pendant des périodes de silence de la parole, fournissant une mesure de variabilité du bruit dans le temps prenant en compte d'une part les erreurs dues à la différence de durée d'estimation entre les quantités IX[$\omega$]I et I$\bar{B}$[$\omega$]I et d'autre part la non-stationarité du bruit ;
- opt[$\alpha(\omega)$] constitue une pondération du terme soustractif qui est fonction de la fréquence traitée et du rapport signal à bruit local, cétte pondération étant bornée.

2. Procédé selon la revendication 1, caractérisé en ce qu'on limite le terme opt[$\alpha(\omega)$] à des valeurs inférieures à 3.

3. Procédé selon la revendication 1 ou 2, caractérisé en ce qu'on calcule le facteur de surestimation $\alpha(\omega)$ sur 5 à 30 trames et on le constitue par la valeur maximale de l'estimation instantanée IB[$\omega$]I parmi les valeurs prises sur ces trames en amont de la trame traitée.

4. Procédé de traitement de signal de parole, caractérisé en ce qu'on applique, en vue de la transmission ou de la reconnaissance de la parole, un traitement de la forme :

$$|Y[\omega]| = |X[\omega]| - opt(\alpha(\omega)) \, |\bar{B}[\omega]|$$

à la transformée, du domaine temporel au domaine fréquentiel, de chaque trame d'un signal provenant d'un capteur, échantillonné, numérisé et formaté en trames de longueur déterminée, où :

- $|X[\omega]|$ est l'estimation de l'amplitude de la parole affectée du bruit ;
- $|\bar{B}[\omega]| = \lambda \, |\bar{B}[\omega]| + (1-\lambda).|B[\omega]|$ est une estimation de l'amplitude du bruit, obtenue à partir d'observations du bruit, pendant des périodes de silence de la parole, estimé à l'aide d'un estimateur ayant une constante de temps $\lambda$ suffisante et à partir de l'estimation $|B[\omega]|$ de l'amplitude du bruit, obtenue à partir de l'observation courante du bruit ;
- $\alpha(\omega)$ est un facteur de surestimation du bruit, calculé sur un nombre prédéterminé de trames de bruit en amont de la trame traitée et pendant des périodes de silence de la parole, fournissant une mesure de variabilité du bruit dans le temps prenant en compte d'une part les erreurs dues à la différence de durée d'estimation entre les quantités $|X[\omega]|$ et $|\bar{B}[\omega]|$ et d'autre part la non-stationarité du bruit ;
- $opt[\alpha(\omega)]$ constitue une pondération du terme soustractif qui est fonction de la fréquence traitée, cette pondération étant bornée et ayant la valeur $opt[\alpha(\omega)] = [\alpha(\omega)/|B(\omega)|]^z$, où z est un facteur de pondération compris entre ½ et 3. avec des estimateurs de variances lissées permettant de réduire le nombre de répétitions nécessaires à la phase d'apprentissage du système de reconnaissance, soit la projection optimisée, rendant l'algorithme de Viterbi plus discriminant, avec des estimateurs de variances fixes ou lissées.

5. Procédé selon la revendication 1, 2 ou 3, caractérisé en ce que l'on donne à $opt[\alpha(\omega)]$, dans le domaine borné, une valeur de la forme :

$$opt[\alpha(\omega)] = (\alpha(\omega)/|\bar{B}[\omega]|).F[|X[\omega]|/|B[\omega]|)$$

où F est une fonction décroissante du rapport signal à bruit fréquentiel $|\chi[\omega]|/|B[\omega]|$

6. Procédé selon la revendication 5, caractérisé en ce que l'on donne à $F(\omega)$ une valeur de la forme générale telle que la figure 4.

7. Procédé de reconnaissance de parole entachée de bruit comportant, outre un procédé de traitement selon l'une quelconque des revendications 1, 2, 3, 5 et 6, une étape de classification utilisant un algorithme de Viterbi mettant en oeuvre soit des densités gaussiennes continues d'observation avec des estimateurs de variances lissées permettant de réduire le nombre de répétitions nécessaires à la phase d'apprentissage du système de reconnaissance, soit la projection optimisée, rendant l'algorithme de Viterbi plus discriminant, avec des estimateurs de variances fixes ou lissées.

8. Procédé selon l'une quelconque des revendications précédentes, caractérisé en ce que la constante de temps $\lambda$ est d'environ 0,9.

**Patentansprüche**

1. Verfahren zur Sprachsignalverarbeitung, dadurch gekennzeichnet, daß man im Hinblick auf die Übertragung oder die Erkennung der Sprache eine Bearbeitung der Form

$$|Y[\omega]| = |X[\omega]| - opt(\alpha(\omega)) \, |\bar{B}[\omega]|$$

anwendet auf die Zeitraum- oder Frequenzraum-Transformierte eines jeden Rahmens eines Signals, welches von einem Aufnehmer herrührt, abgetastet, digitalisiert und in Rahmen vorbestimmter Länge formatiert wird, wobei:

- $|X[\omega]|$ eine Abschätzung der Amplitude der Sprache mit Rauschen ist;
- $|\bar{B}[\omega]| = \lambda \, |\bar{B}[\omega]| + (1-\lambda) . |B[\omega]|$ eine Abschätzung der Amplitude des Rauschens ist, welche aus Beobachtungen des Rauschens während Perioden der Sprachruhe erhalten wurde und mit Hilfe eines Abschätzungsgebers, der eine ausreichende Zeitkonstante $\lambda$ aufweist, und aus der Abschätzung $|B[\omega]|$ der Amplitude des

Rauschens abgeschätzt wurde, welche aus der momentanen Beobachtung des Rauschens erhalten wird;

- $\alpha(\omega)$ ein Rausch-Über-Abschätzungsfaktor ist, welcher aus einer vorbestimmten Anzahl von Rahmen des Rauschens vor dem bearbeiteten Rahmen und während Perioden der Sprachruhe berechnet wurde und welcher ein Maß der zeitlichen Rauschschwankung unter Berücksichtigung einerseits von Fehlern aufgrund des Unterschieds der Abschätzdauer zwischen den Größen IX[$\omega$]I und I$\bar{\mathrm{B}}$[$\omega$]I und andererseits der Nicht-Stationarität des Rauschens bildet;
- opt [$\alpha(\omega)$] eine Wichtung des Subtraktionsterms bildet, welcher eine Funktion der bearbeiteten Frequenz im Bezug auf das lokale Rauschsignal ist, wobei diese Wichtung beschränkt ist.

2. Verfahren nach Anspruch 1, dadurch gekennzeichnet, daß man den Term opt[$\alpha(\omega)$] auf Werte kleiner als 3 begrenzt.

3. Verfahren nach Anspruch 1 oder 2, dadurch gekennzeichnet, daß man den Über-Abschätzungsfaktor $\alpha(\omega)$ auf 5 bis 30 Rahmen berechnet und man ihn durch den Maximalwert der ausgeführten Abschätzung IB[$\omega$]I aus den Werten bildet, welche aus den Rahmen vor dem bearbeiteten Rahmen genommen wurden.

4. Verfahren zur Sprachsignalverarbeitung, dadurch gekennzeichnet, daß im Hinblick auf die Übertragung oder die Erkennung der Sprache eine Bearbeitung der Form

$$\mathrm{IY}[\omega]\mathrm{I} = \mathrm{IX}[\omega]\mathrm{I} - \mathrm{opt}(\alpha(\omega)) \, \mathrm{I}\bar{\mathrm{B}}[\omega]\mathrm{I}$$

anwendet auf die Zeitraum- oder Frequenzraum-Transformierte eines jeden Rahmens eines Signals ausübt, welches von einem Aufnehmer herrührt, abgetastet, digitalisiert und in Rahmen vorbestimmter Länge formatiert ist, wobei:

- IX[$\omega$]I eine Abschätzung der Amplitude der Sprache mit Rauschen ist;
- I$\bar{\mathrm{B}}$[$\omega$]I = $\lambda$ I$\bar{\mathrm{B}}$[$\omega$]I + (1-$\lambda$) . IB[$\omega$]I eine Abschätzung der Amplitude des Rauschens ist, welche aus Beobachtungen des Rauschens während Perioden der Sprachruhe erhalten wurde und mit Hilfe eines Abschätzungsgebers, der eine ausreichende Zeitkonstante $\lambda$ aufweist, und aus der Abschätzung IB[$\omega$]I der Amplitude des Rauschens abgeschätzt wurde, welche aus der momentanen Beobachtung des Rauschens erhalten wird;
- $\alpha(\omega)$ ein Rausch-Über-Abschätzungsfaktor ist, welcher aus einer vorbestimmten Anzahl von Rahmen des Rauschens vor dem bearbeiteten Rahmen und während Perioden der Sprachruhe berechnet wurde und welcher ein Maß der zeitlichen Rauschschwankung unter Berücksichtigung einerseits von Fehlern aufgrund des Unterschieds der Abschätzdauer zwischen den Größen IX[$\omega$]I und I$\bar{\mathrm{B}}$[$\omega$]I und andererseits der Nicht-Stationarität des Rauschens bildet;
- opt [$\alpha(\omega)$] eine Wichtung des Subtraktionsterms bildet, welcher eine Funktion der bearbeiteten Frequenz ist, wobei diese Wichtung beschränkt ist und den Wert opt [$\alpha(\omega)$] = [$\alpha(\omega)$/B($\omega$)I]$^z$ aufweist, wobei z ein Wichtungsfaktor zwischen ½ und 3 ist.

5. Verfahren nach Anspruch 1, 2 oder 3, dadurch gekennzeichnet, daß man opt[$\alpha(\omega)$] in dem beschränkten Bereich einen Wert der Form

$$\mathrm{opt}[\alpha(\omega)] = (\alpha(\omega)/\mathrm{I}\bar{\mathrm{B}}[\omega]\mathrm{I}).\mathrm{F}[\mathrm{IX}[\omega]\mathrm{I}/\mathrm{IB}[\omega]\mathrm{I}]$$

gibt, wobei F eine abnehmende Funktion des frequentiellen Rausch-Signal-Verhältnisses I$\chi$[$\omega$]I/IB[$\omega$]I ist.

6. Verfahren nach Anspruch 5, dadurch gekennzeichnet, daß man F($\omega$) einen Wert der allgemeinen Gestalt gemäß Fig. 4 gibt.

7. Verfahren zur Erkennung von durch Rauschen gestörter Sprache, welches neben einem Verfahren zur Bearbeitung nach einem der Ansprüche 1, 2, 3, 5 und 6 einen Klassifizierungsschritt umfaßt, welcher einen Viterbi-Algorithmus verwendet, der entweder aufeinanderfolgende Gauss'sche Dichten der Beobachtung mit Abschätzungen geglätteter Varianzen, was es ermöglicht, die Zahl der notwendigen Wiederholungen bei der Lernphase des Erkennungssystems zu verringern, oder die optimierte Projektion einsetzt, was den Viterbi-Algorithmus diskriminierender macht, und zwar mit Abschätzungen fester oder geglätteter Varianzen.

8. Verfahren nach einem der vorangehenden Ansprüche, dadurch gekennzeichnet, daß die Zeitkonstante λ etwa 0,9 ist.

**Claims**

1. Method of processing a speech signal,
   characterised in that, with a view to the transmission or the recognition of the speech, a process is applied in the form:

$$|Y[\omega]| = |X[\omega]| - \text{opt}(\alpha(\omega))\ |\bar{B}[\omega]|$$

   to the transform, from the time domain to the frequency domain, of each unit of a signal coming from a sensor, sampled, digitised and formatted into units of fixed length, in which:

   - $|X[\omega]|$ is the estimation of amplitude of the speech affected by noise;

   - $|\bar{B}[\omega]| = \lambda\ |\bar{B}[\omega]| + (1 - \lambda)\ .\ |B[\omega]|$ is an estimation of the amplitude of the noise, obtained from observations of the noise, during periods of silence in the speech, estimated using an estimator which has a sufficient time constant λ and from the estimation $|B[\omega]|$ of the amplitude of the noise, obtained from the current observation of the noise;

   - $\alpha(\omega)$ is a noise over-estimation factor, calculated on a predetermined number of units of noise preceding the unit being processed and during periods of silence in the speech, providing a measure of variability of the noise in time taking into account on the one hand errors due to the difference in estimated duration between the quantities $|X[\omega]|$ and $|\bar{B}[\omega]|$ and on the other hand the non-stationary nature of the noise;

   - $\text{opt}[\alpha(\omega)]$ constitutes a weighting of the subtractive term which is a function of the frequency being processed and of the signal to local noise ratio, this weighting being limited.

2. Method in accordance with claim 1, characterised in that the term $\text{opt}[\alpha(\omega)]$ is limited to values of less than 3.

3. Method in accordance with claim 1 or 2, characterised in that the overestimation factor $\alpha(\omega)$ is calculated over 5 to 30 units and it is constituted by the maximum value of the instantaneous estimation $|B[\omega]|$ from the values taken from these units preceding the unit being processed.

4. Method of processing a speech signal, characterised in that, with a view to the transmission or the recognition of the speech, a process is applied of the form:

$$|Y[\omega]| = |X[\omega]| - \text{opt}(\alpha(\omega))\ |\bar{B}[\omega]|$$

   to the transform, from the time domain to the frequency domain, of each unit of a signal coming from a sensor, sampled, digitised and formatted into units of fixed length, in which:

   - $|X[\omega]|$ is the estimation of amplitude of the speech affected by the noise;

   - $|\bar{B}[\omega]| = \lambda\ |\bar{B}[\omega]| + (1 - \lambda)\ .\ |B[\omega]|$ is an estimation of the amplitude of the noise, obtained from observations of the noise, during periods of silence in the speech, estimated using an estimator which has a sufficient time constant λ and from the estimation $|B[\omega]|$ of the amplitude of the noise, obtained from the current observation of the noise;

   - $\alpha(\omega)$ is a noise over-estimation factor, calculated on a predetermined number of units of noise preceding the unit being processed and during periods of silence in the speech, providing a measure of variability of the noise in time taking into account on the one hand errors due to the difference in estimated duration between the quantities $|X[\omega]|$ and $|\bar{B}[\omega]|$ and on the other hand the non-stationary nature of the noise;

- opt [$\alpha$ ($\omega$)] constitutes a weighting of the subtractive term which is a function of the frequency being processed, this weighting being limited and having the value opt [$\alpha$ ($\omega$)] = [$\alpha$ ($\omega$) / IB [$\omega$]I]$^z$, where z is a weighting factor of between ½ and 3.

5. Method in accordance with claim 1, 2 or 3, characterised in that opt [$\alpha$ ($\omega$)], in the limited domain, is given a value of the form:

$$\text{opt } [\alpha\ (\omega)] = (\alpha\ (\omega) / \overline{B}\ [\omega]I)\ .\ F\ [IX[\omega]I/IB\ [\omega]I]$$

in which F is a decreasing function of the signal to frequency noise ratio IX[$\omega$]I/IB[$\omega$]I

6. Method in accordance with claim 5, characterised in that F($\omega$) is given a value in the general form shown in figure 4.

7. Recognition method for speech tainted with noise, comprising in addition to a processing procedure in accordance with any of claims 1, 2, 3, 5 and 6, a classification stage using a Viterbi algorithm involving either continuous Gaussian densities of observation with estimators of smoothed variances making it possible to reduce the number of repetitions necessary in the training stage of the recognition system, or optimised projection, making the Viterbi algorithm more discriminating, with estimators of fixed or smoothed variances.

8. Method in accordance with any of the preceding claims, characterised in that the time constant $\lambda$ is about 0.9.

# FIG.1.

10

14

16

$FFT^{-1}$

12

18

# FIG.2.

18

SIGNAL TEMPOREL

20

$|FFT|$

ESTIMATION ROBUSTE DU MODÈLE DE BRUIT ÉTENDU

SOUSTRACTION NON LINÉAIRE

BRUIT:|B|

PAROLE:|X|

CALCUL ESTIMEE ROBUSTE DU BRUIT
$|\bar{B}| = \lambda |\bar{B}| + (1-\lambda)|B|$

$|Y(W)| = Xt - F\left[|\bar{B}|, \alpha(\omega), \dfrac{X(\omega)}{\bar{B}(\omega)}\right]$

ESTIMATION DU FACTEUR DE SURESTIMATION $\alpha(\omega)$

$FFT^{-1}$

16

FIG.2.

## FIG.3.

```
                    ┌─────────┐
                    │  IFFTI  │ ──20
                    └─────────┘
```

ESTIMATION ROBUSTE DU
MODÈLE DE BRUIT                    SOUSTRACTION NON LINÉAIRE        ┌──────────────┐
ÉTENDU                                                             │ LEXIQUE:     │ ──24
                                                                   │ MODÈLES DE   │
         BRUIT:|B|          PAROLE:|X|                             │ RÉFÉRENCE    │
                                                                   └──────────────┘

┌──────────────────┐      ┌──────────────────────┐    22    ┌──────────────┐
│ CALCUL MODÈLE    │      │ Yt=Xt_F[|B(ω)|,      │ ───────  │ COMPARAISON  │
│ ROBUSTE DU BRUIT │      │ α(ω),X(ω)/|B|(ω)]    │          │ (VITERBI)    │
│ |B̄|=λ|B̄|+(1_λ)|B||      └──────────────────────┘          └──────────────┘
└──────────────────┘

┌──────────────────┐      ┌──────────────────────┐          ┌──────────────┐
│ ESTIMATION   DU  │      │ CALCUL PARAMÈTRES    │          │ DÉCISION     │
│ FACTEUR    DE    │      │ CEPSTRAUX            │          └──────────────┘
│ SURESTIMATION α(ω)│      └──────────────────────┘
└──────────────────┘              25
```

## FIG.4.

$\beta(\omega)$
$\overline{\alpha(\omega)}$

SNR min          SNR max

(I) (II) (III) (IV)